# DEMANDE DE BREVET EUROPEEN

(11) **EP 0 860 107 A1**
(43) Date de publication de la demande: **26.08.1998**
(21) Numéro de dépôt: 98440029.1
(22) Date de dépôt: 19.02.1998
(51) Int. Cl.: A01D 85/00

(54) **Dispositif de groupage de balles de paille, foin ou analogue en sortie de presse, botteleuse ou autre**

(30) Priorité: 21.02.1997 FR 9702262
(71) Demandeur: Bergaut-Menuel, Pierre, 51290 Somsois (FR)
(72) Inventeur: Bergaut-Menuel, Pierre, 51290 Somsois (FR)
(74) Mandataire: Rhein, Alain

(57) **Abrégé**

L'invention a trait à un dispositif de groupage (1) d'un certain nombre de balles (2A, 2'A ; 2B, 2'B) de paille, de foin ou analogue, sortant d'un canal (12) d'une presse (3) , botteleuse ou autre à laquelle ledit dispositif (1) est raccordé au travers de moyens d'attelage appropriés (7), ledit dispositif de groupage (1) se présentant sous la forme d'une remorque (8) constituée par un châssis (9) reposant au sol par l'intermédiaire de moyens de roulement (10) et comportant des moyens de rangement (4) et d'empilement (5) automatiques d'un nombre donné de ces balles (2A, 2'A ; 2B, 2'B).

Ce dispositif de groupage (1) est caractérisé par le fait que ces moyens de rangement (4) et d'empilement (5) sont à même de ranger et d'empiler lesdites balles (2A, 2B ; 2'A, 2'B) sur un plateau de chargement (6) du type basculant, ce dernier comportant une surface dont la largeur correspond, sensiblement, à (N) fois la largeur des balles (2A, 2B ...).

## Description

L'invention a trait à un dispositif de groupage d'un certain nombre de balles de paille, de foin ou analogue, sortant d'un canal d'une presse, botteleuse ou autre à laquelle ledit dispositif est raccordé au travers de moyens d'attelage appropriés, ledit dispositif de groupage se présentant sous la forme d'une remorque constituée par un châssis reposant au sol par l'intermédiaire de moyens de roulement et comportant des moyens de rangement et d'empilement automatiques d'un nombre donnée de ces balles

La présente invention concerne le domaine des machines agricoles destinées, plus particulièrement, à regrouper des balles de paille, de foin ou autre au moment ou celles-ci sortent d'une presse ou d'une botteleuse en vue de les charger sur un engin de transport.

Après fauchaison et séchage, la paille, le foin ou analogue est rassemblé, compacté et lié grâce à une presse, botteleuse ou autre sous la forme de balles. Celles-ci peuvent adopter des poids, des formes et des dimensions que l'utilisateur de la presse peut ajuster en fonction des besoins et/ou de la nature du fourrage. Ainsi, ces balles peuvent être relativement petites ou de très grande taille mais également de faible ou de forte densité et se présenter sous une forme généralement parallélépipédique ou cylindrique.

Au débouché d'une telle presse, les balles sont évacuées les unes après les autres et au-fur-et-à-mesure de l'avancement de ladite presse pour retomber à même le sol ou elles attendent l'arrivée d'un engin de levage. Ce dernier sera alors chargé de récupérer lesdites balles et de les disposer sur une remorque de transport ou analogue afin de pouvoir les véhiculer en direction de leur lieu de stockage.

Ainsi, une telle botteleuse, presse ou analogue rejette, de manière intermittente, des balles se retrouvant espacées les unes des autres tout le long du parcours emprunté par ladite presse. De ce fait, la distance séparant une balle de la suivante implique obligatoirement le chargement individuel desdites balles sur la remorque de transport. Ceci suppose une multitude d'arrêts de l'engin de levage et une multiplication des opérations de chargement au moment de la récupération desdites balles. Une telle manière de procéder se traduit alors par un certain nombre d'inconvénients qui tiennent, plus particulièrement, dans une perte importante de temps, résultant d'un nombre conséquent d'allées et venues inutiles et, bien sûr, de la multiplication des opérations de manutention desdites balles.

Afin de résoudre de tels inconvénients et de regrouper un certain nombre de balles, il est connu, au travers du document européen EP-0.247.700, un dispositif pour le chargement et le déchargement de balles de paille ou analogues. Un tel dispositif se présente sous la forme d'une remorque constituée par un châssis reposant au sol par l'intermédiaire de moyens de roulement. Une telle remorque comporte, en outre, des moyens d'attelage à même de permettre son raccordement à une botteleuse ou analogue. On remarquera que cette remorque présente un certain nombre de compartiments séparés par une paroi et destinés à recevoir, empilées les unes sur les autres, des balles de foin. Ces dernières, à l'intérieur de chaque compartiment, constituent un empilement vertical à même de reposer sur un fond de nature escamotable constitué par deux volets montés pivotants à l'extrémité inférieure de chacune des parois délimitant le compartiment. Une telle remorque est complétée par des moyens de remplissage qui se présentent sous la forme d'une boîte de distribution disposée par dessus les compartiments par rapport auxquels ladite boîte est à même de se déplacer, de manière séquentielle, en vue du remplissage de ladite remorque. Cette boîte de distribution est alimentée en balles par l'intermédiaire d'une rampe de guidage montée, de manière pivotante, au niveau des moyens d'attelage et à la sortie du canal de la botteleuse ou analogue.

On remarquera que la solution apportée par un tel dispositif au problème de l'empilement des balles est uniquement partielle et présente, cependant, un certain nombre d'inconvénients. A ce titre, on observera que la rampe de guidage est articulée au devant du canal de la botteleuse avec lequel ladite rampe forme un angle. La présence de cet angle a pour effet de gêner la progression des balles, notamment, lors du passage de ces dernières sur ladite rampe. Aussi, s'il est parfois possible de s'accommoder d'une telle gêne, notamment dans le cas de balles de petite dimension et de faible densité, le convoyage d'une balle de moyenne, voire de forte, densité et de taille égale ou supérieure à la moyenne a, souvent, pour effet d'occasionner un blocage, une rupture de ladite balle ainsi qu'un bourrage au niveau de ladite rampe.

La présente invention permet de pallier aux inconvénients cités ci-dessus au travers d'un dispositif particulièrement simple et efficace.

A cet effet, l'invention a trait à un dispositif de groupage d'un certain nombre de balles de paille, de foin ou analogue, sortant d'un canal d'une presse, botteleuse ou autre à laquelle ledit dispositif est raccordé au travers de moyens d'attelage appropriés, ledit dispositif de groupage se présentant sous la forme d'une remorque constituée par un châssis reposant au sol par l'intermédiaire de moyens de roulement et comportant des moyens de rangement et d'empilement automatiques d'un nombre donné de ces balles, caractérisé par le fait que ces moyens sont à même de ranger et d'empiler lesdites balles sur un plateau de chargement du type basculant, ce dernier comportant une surface dont la largeur correspond, sensiblement, à N fois la largeur des balles.

En ce qui concerne, plus particulièrement, les moyens de rangement, ces derniers se présentent sous la forme d'un plateau de chargement monté mobile en translation au-devant du canal de sortie des balles de la presse et comportent des moyens aptes à commander le déplacement séquentiel de ce plateau de chargement.

Selon une autre caractéristique de l'invention, ledit dispositif de groupage comporte également des moyens de déchargement des balles rangées et empilées une fois la dernière balle disposée sur le plateau de chargement.

Une telle invention permet, avantageusement, de regrouper, de manière ordonnée, un certain nombre de balles de paille, foin ou analogue directement à la sortie de la presse, botteleuse ou autre. Un tel regroupement réduira donc, sensiblement, le nombre d'opérations de chargement desdites balles sur une remorque de transport en saisissant, grâce à des moyens de préhension et de levage appropriés et en une seule opération, la totalité des balles composant ledit regroupement.

L'invention est exposée plus en détail dans la description qui va suivre se rapportant au dessin joint en annexe et illustrant un mode de réalisation.
- la figure 1 est une vue schématisée et en élévation du dispositif, objet de l'invention ;
- la figure 2 est une vue schématisée et de dessus de ce même dispositif.

La présente invention concerne le domaine des machines agricoles, plus particulièrement, celles qui consistent à regrouper un certain nombre de balles de paille, foin ou analogue.

Ainsi, la présente invention a trait à un dispositif de groupage 1 d'un certain nombre de balles 2A, 2'A, 2B, 2'B de paille, de foin ou analogue sortant d'une presse 3, botteleuse ou autre. En fait, selon l'invention, ce dispositif 1 comporte des moyens de rangement 4 et d'empilement 5 automatiques d'un nombre donné de ces balles 2A, 2B ; 2'A, 2'B sur un plateau de chargement 6, ledit dispositif 1 étant à même d'être raccordé, au travers de moyens d'attelage appropriés 7 à ladite presse 3, botteleuse ou analogue.

Un tel dispositif se présente, plus particulièrement, sous la forme d'une remorque 8 constituée par un châssis 9, notamment un châssis en « U », reposant au sol par l'intermédiaire de moyens de roulement 10 et muni desdits moyens d'attelage 7. Sur ce châssis 9 est monté ledit plateau de chargement 6 dont la surface 11 est destinée à recevoir lesdites balles 2A, 2B.... sortant de la presse 3 par un canal 12.

Aussi, de manière à autoriser la disposition, côte à côte, d'un nombre N de balles 2A, 2B sur ladite surface 11, celle-ci présente une largeur 13 correspondant sensiblement à N fois la largeur desdites balles 2A, 2B.

Afin de mettre en oeuvre une telle disposition des balles 2A, 2B ; 2'A, 2'B, le dispositif de groupage 1 comporte les moyens de rangement automatiques 4 desdites balles les unes à côté des autres.

Ces moyens de rangement 4 se présentent, avantageusement, sous la forme d'un plateau de chargement 6 monté mobile en translation au devant du canal 12 de sortie des balles 2A, 2B... de la presse 3 et comportent des moyens 14 aptes à commander le déplacement séquentiel de ce plateau de chargement 6.

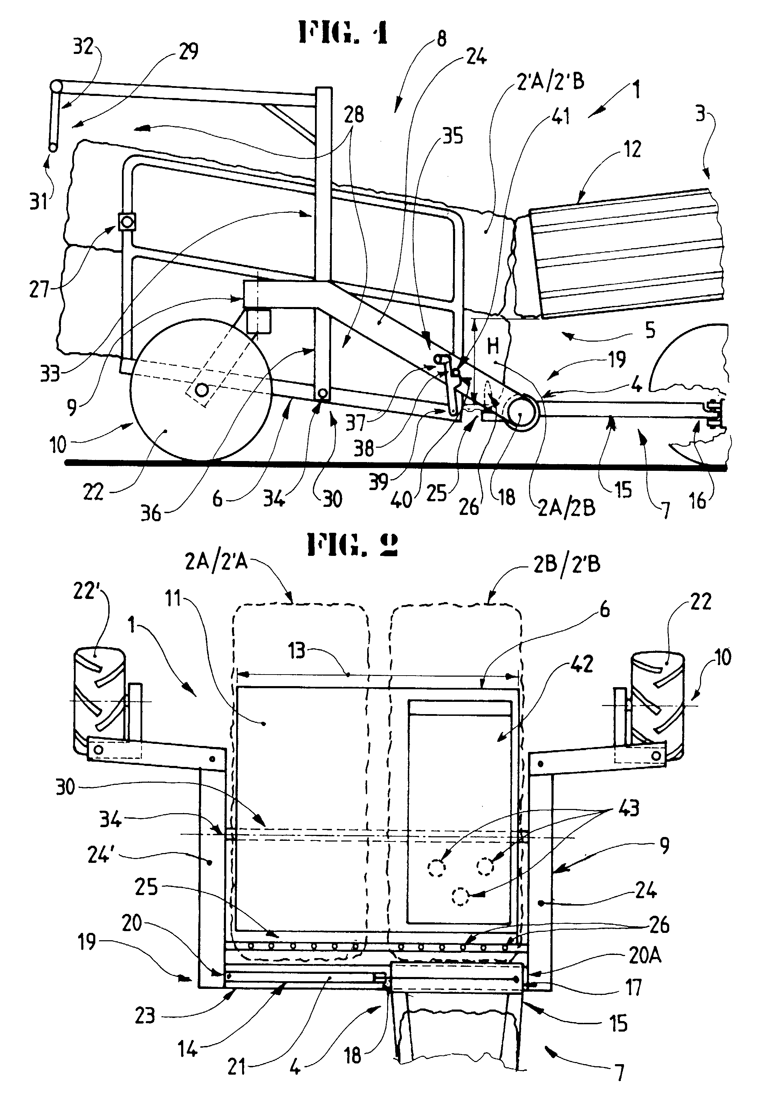

Selon un mode de réalisation préférentiel, représenté figures 1 et 2, une telle translation du plateau 6 par rapport à la presse 3 est rendue possible par le montage, mobile en translation par rapport au châssis 9, des moyens d'attelage 7. A cet effet, ces derniers se présentent plus particulièrement sous la forme d'une flèche 15 fixée à son sommet 16 à la presse 3 et dont la base 17 est montée coulissante sur un axe 18 fixé transversalement et à ses extrémités sur la partie avant 19 dudit châssis 9. Cette flèche 15 est alors susceptible de coulisser entre les deux extrémités 20, 20A dudit axe 18.

Selon l'invention, les moyens 14 aptes à commander le déplacement séquentiel du plateau 6 se présentent, plus particulièrement, sous la forme d'un vérin 21 préférentiellement, disposé parallèlement à l'axe 18. Bien que dans la suite de la description, il soit systématiquement fait état d'un vérin 21, l'invention n'y est nullement limitée. Ainsi, il est également possible de faire appel à un moteur et/ou à une vis sans fin constituant alors les moyens 14.

Comme il a été précisé dans la description qui précède, la remorque 8 comporte des moyens de roulement 10 sous forme d'une ou plusieurs roues 22, 22' qui, pour faciliter le déplacement latéral de cette remorque 8 par rapport à la presse 3, sont montées folles sur le châssis 9. A ce propos et comme représenté en figure 2, le châssis 9 emprunte, avantageusement, une forme en « U » dans un plan sensiblement horizontal. Plus particulièrement, il comporte une traverse 23 avant recevant l'axe 18 et aux extrémités de laquelle s'étendent, vers l'arrière, des longerons 24, 24'. Ceux-ci sont disposés, avantageusement, de part et d'autre du plateau de chargement 6 permettant de diminuer, sensiblement, la garde au sol de ce dernier. Quant aux roues 22, 22' elles sont montées folles aux extrémités de ces longerons 24, 24'.

Toutefois, l'on peut encore imaginer un châssis de forme différente, par ailleurs monté sur un essieu recevant, à ses extrémités et de manière folle, les roues 22, 22'.

Lors de l'opération de chargement du plateau 6, la flèche 15 se situe, au début de cette opération, sensiblement, en butée contre l'une quelconque des extrémités de l'axe 18. La première balle 2A sortant de la presse 3 par le canal 12 est alors orientée par ce dernier en direction du plateau de chargement 6. La balle 2A entre en contact avec celui-ci par une de ses extrémités, avant de glisser le long dudit plateau 6 pour, finalement, venir reposer sur sa surface 11. A ce moment là, l'on peut déplacer transversalement, le plateau de chargement 6 pour venir déposer une nouvelle balle 2B à côté de la précédente 2A. Cependant, l'on peut aussi, à ce stade, faire intervenir les moyens d'empilement 5 pour disposer, immédiatement sur la première balle 2A, une suivante 2'A. En fait, on ordonne les balles de manière à former, successivement, soit des rangées disposées les unes sur les autres, soit des piles que l'on vient juxtaposer les unes aux autres. Cette dernière solution sera préférentiellement retenue dans la mesure où elle limite le nombre de déplacements transversaux à communiquer au plateau de chargement 6.

Les moyens d'empilement 5 sont définis, tout d'abord, par un canal 12 de sortie des balles 2A, 2B ... de la presse 3 situé à une hauteur H par rapport au plateau de chargement 6. Cette hauteur H correspond à au moins P fois la hauteur d'une balle, sachant que le nombre de balles à empiler est égal à P + 1.

Ces moyens d'empilement 5 comportent, en outre, des moyens 25 pour retenir la ou les balles inférieures 2A, 2B au moment de disposer une nouvelle balle 2'A, 2'B sur une pile. En fait, ces moyens 25 sont destinés à empêcher, lors du chargement d'une nouvelle balle 2'A, 2'B, le glissement de cette ou ces balles 2A, 2B par rapport à la surface 11 du plateau 6 et, donc, leur déchargement involontaire.

La mise en oeuvre de ces moyens de retenue 25 permet alors à la balle 2'A sortant du canal 12 de la presse 3 et se présentant au-dessus de la balle 2A sur laquelle elle est censée s'empiler, de glisser sur cette dernière 2A pour finalement venir reposer dessus.

Selon l'exemple retenu représenté figure 1 et correspondant à un mode de réalisation particulièrement bien adapté au regroupement de balles parallélépipédiques de haute densité, l'empilement de ces balles se limite à la superposition de deux d'entre elles. Dans un pareil cas, lesdits moyens de retenue 25 se présentent, plus particulièrement, sous la forme de dents ou de pointes de retenue 26 sur lesquelles vient s'empaler la première rangée de balles 2A, 2B reposant sur la surface 11 du plateau 6. Ces dents ou pointes de retenue 26 sont solidaires, soit du châssis 9, soit du plateau 6. Dans ce dernier cas de figure, elles sont, préférentiellement, de nature escamotable pour les raisons qui apparaîtront plus en avant dans la description.

On notera qu'une telle solution peut également être adoptée si l'on souhaite empiler plus de deux balles. En effet, le problème du glissement d'une balle inférieure 2A, 2B au moment de charger de nouvelles balles 2'A, 2'B, ne se pose essentiellement qu'entre la première balle 2A, 2B et le plateau de chargement 6.

Si l'on tient compte du fait que l'on vient constituer, successivement, les piles les unes à côté des autres, le dispositif de groupage 1 est, en outre, muni de moyens 27 à même de détecter la présence de la P + 1ème balle 2'A ; 2'B sur une pile. Ces moyens 27 sont également aptes à actionner les moyens de rangement 4, notamment le vérin 21, pour assurer le déplacement transversal du plateau de chargement 6 d'un pas correspondant, sensiblement, à la largeur d'une balle. L'on vient, ainsi, constituer, successivement et de manière automatique, les piles 2A, 2'A ; 2B, 2'B sur ce plateau de chargement 6. On notera, en ce qui concerne les moyens de détection 27, que ceux-ci peuvent se présenter sous forme d'un capteur quelconque, optique, électronique, électromécanique, voire simplement mécanique. On peut tout particulièrement imaginer, dans ce dernier cas d'espèce, un ou plusieurs leviers montés pivotants sur une structure quelconque disposée sur le châssis 9, ce levier ou l'un d'entre eux étant actionné par la dernière balle d'une pile en vue d'entraîner la commande du vérin 21.

Finalement, le dispositif de groupage 1 comporte des moyens 28 prévus pour assurer le déchargement des balles 2A, 2B ; 2'A, 2'B parfaitement rangées et ordonnées sur le plateau de chargement 6.

Ces moyens de déchargement 28 consistent, d'une part, en des moyens de contrôle 29 de la présence de la dernière balle 2'B sur la dernière pile 2B, 2'B et, d'autre part, en des moyens 30 conçus pour assurer le basculement du plateau 6 vers l'arrière du dispositif de groupage 1 et la descente par gravité des balles 2A, 2'A ; 2B, 2'B.

Les moyens de contrôle 29 se présentent, là encore, sous forme d'un capteur 31 quelconque, optique, électronique, mécanique ou autre, ayant, pour fonction, précisément, de déclencher le fonctionnement des moyens 30. Ainsi, à titre d'exemple, de tels moyens de contrôle 29 peuvent être constitués, substantiellement, par un loquet basculant 32 fixé sur un arceau de consolidation 33 surmontant le plateau de chargement 6, ceci de telle manière à pouvoir être actionné par cette dernière balle 2'B, une fois celle-ci quasi empilée sur la balle précédente 2B.

A noter que si ces moyens de contrôle 29 ont pour fonction de commander le basculement du plateau 6, ils sont également susceptibles de rendre inopérants les moyens de retenue 25, notamment en escamotant les dents ou pointes de retenue 26, tout particulièrement lorsque celles-ci sont montées directement sur le plateau de chargement 6. Il se peut aussi, dans le cas où ces dents 26 sont montées sur le châssis 9, que les balles de paille 2A, 2B de la première rangée s'en dégagent automatiquement lors du basculement du plateau de chargement 6 comme cela sera décrit ci-dessous.

Quant aux moyens 30, ils consistent en un axe de rotation transversal 34, solidaire du châssis 9 et sur lequel est monté, déséquilibré vers l'arrière, ceci d'origine ou sous l'influence du poids des balles 2A, 2'A ; 2B, 2'B, le plateau de chargement 6. A noter, à ce propos, que le dispositif de groupage 1 reçoit, en outre, des moyens de maintien 35 dudit plateau 6 dans une position empêchant l'évacuation des balles. Sur ces moyens de maintien 35 interviennent, précisément, les moyens de contrôle 29 pour assurer leur déblocage et le basculement, au bon moment, dudit plateau 6.

Selon le mode de réalisation préféré, représenté figure 1, l'axe 34 est fixé aux extrémités inférieures de montants latéraux 36 rendus solidaires du châssis 9 et supportant, par ailleurs, l'arceau de consolidation 33 recevant, par exemple, les moyens de détection 27 voire, aussi, les moyens de contrôle 29.

Quant aux moyens 35 destinés à maintenir le plateau 6 dans sa position de chargement tant qu'il n'a pas reçu toutes les balles 2A, 2'A ; 2B, 2'B, ils sont constitués, avantageusement, par un loquet 37 sous forme d'une pièce en équerre 38 montée pivotante, à l'une de ses extrémités 39, sur le plateau 6 et dont l'extrémité libre porte un doigt de verrouillage 40 destiné à coopérer avec un organe de retenue 41 monté sur le châssis 9, ceci lorsque le plateau 6 est en position de chargement. Lorsque la présence de la dernière balle 2'B est détectée par les moyens de contrôle 29, ces derniers désactivent les moyens de maintien 35, en ce sens qu'ils commandent, mécaniquement, électriquement ou par tout autre moyen, la libération du doigt de verrouillage 40 par rapport à l'organe de retenue 41. Le plateau de chargement 6 est alors libre de basculer autour de l'axe 34, par rapport au châssis 9.

Il est à noter que, dans le cas où les moyens de retenue 25 se présentent sous la forme de dents ou de pointes de retenue 26 solidaires dudit châssis 9 comme il a été représenté figure 1, un tel basculement du plateau 6 par rapport au châssis 9 s'effectue également par rapport auxdites dents de retenue 26 desquelles les balles 2A, 2B se dégagent par le simple fait du basculement du plateau 6.

Il est à noter que, au débouché du canal 12 de la presse 3, les premières balles 2A, 2B, si elles ne sont pas guidées et soutenues dans leur descente sur le plateau de chargement 6, peuvent se rompre sous leur propre poids, plus particulièrement lorsqu'elles sont de taille importante.

Pour éviter cela, sur ce plateau de chargement 6 peut être montée pivotante au moins une rampe de guidage 42 dont l'extrémité avant est maintenue surélevée sensiblement à hauteur de la sortie du canal 12, ceci sous l'impulsion de moyens élastiques 43 appropriés. En fait, la raideur de ces moyens élastiques 43, par exemple sous forme de ressorts de compression, est déterminée telle que ladite rampe de guidage 42 puisse s'affaisser, progressivement, sur le plateau de chargement 6, sous l'effet du propre poids d'une balle.

Selon un mode de réalisation préféré, le plateau de chargement 6 comporte autant de rampes de guidage 42 disposées côte à côte qu'il est en mesure de recevoir de piles de balles 2A, 2'A ; 2B, 2'B.

On rappellera que, si dans la description qui précède et dans les figures jointes, il est souvent fait référence à un dispositif de groupage 1 susceptible de regrouper quatre balles, ceci correspond à un mode préféré de réalisation et que l'invention n'y est nullement limitée.

Ainsi, le dispositif faisant l'objet de la présente invention permet de regrouper plusieurs balles de paille, de foin ou analogue à la sortie d'une presse. Un tel regroupement permet d'assurer le chargement de plusieurs balles sur un engin de transport en une seule opération. Ceci se traduit par une réduction substantielle des opérations de manutention par l'engin de levage lors dudit chargement des balles. De plus, le fait de regrouper ces balles permet, en outre, d'éviter, avantageusement, un nombre incessant d'allées et venues inutiles aux engins de levage.

En conséquence, un tel dispositif de groupage de balles apporte un progrès considérable dans le domaine considéré.

## Revendications

1. Dispositif de groupage (1) d'un certain nombre de balles (2A, 2'A ; 2B, 2'B) de paille, de foin ou analogue, sortant d'un canal (12) d'une presse (3), botteleuse ou autre à laquelle ledit dispositif (1) est raccordé au travers de moyens d'attelage appropriés (7), ledit dispositif de groupage (1) se présentant sous la forme d'une remorque (8) constituée par un châssis (9) reposant au sol par l'intermédiaire de moyens de roulement (10) et comportant des moyens de rangement (4) et d'empilement (5) automatiques d'un nombre donnée de ces balles (2A, 2'A ; 2B, 2'B), caractérisé par le fait que ces moyens (4, 5) sont à même de ranger et d'empiler lesdites balles (2A, 2B ; 2'A, 2'B) sur un plateau de chargement (6) du type basculant, ce dernier comportant une surface (11) dont la largeur (13) correspond, sensiblement, à (N) fois la largeur des balles (2A, 2B ...).

2. Dispositif de groupage (1) selon la revendication 1, caractérisé par le fait que les moyens de rangement (4) se présentent sous la forme d'un plateau de chargement (6) monté mobile en translation au-devant du canal (12) de sortie des balles (2A, 2B) de la presse (3) et comporte des moyens (14) aptes à commander le déplacement séquentiel de ce plateau de chargement (6).

3. Dispositif de groupage (1) selon la revendication 2, caractérisé par le fait que les moyens d'attelage (7) se présentent sous forme d'une flèche (15) fixée à son sommet (16) à la presse (3) et dont la base (17) est montée coulissante sur un axe (18) fixé transversalement et à ses extrémités sur la partie avant (19) d'un châssis (9), cette flèche (15) étant susceptible de coulisser entre les extrémités (20, 20A) dudit axe (18) sous l'impulsion des moyens (14) , plus particulièrement sous forme d'un vérin (21).

4. Dispositif de groupage (1) selon la revendication 1 et l'une quelconque des revendications 2 et 3, caractérisé par le fait que la remorque (8) comporte des moyens de roulement (10) sous forme d'une ou plusieurs roues (22, 22') montées folles sur le châssis (9) pour faciliter le déplacement latéral de ladite remorque (8) , donc du plateau de chargement (6) sous l'impulsion des moyens (14).

5. Dispositif de groupage (1) selon l'une quelconque des revendications précédentes, caractérisé par le fait que les moyens d'empilement (5) se présentent sous la forme d'un canal (12) de sortie de balles (2A, 2'A ...) de la presse (3) situé à une hauteur (H) par rapport au plateau de chargement (6), correspondant à au moins (P) fois la hauteur d'une balle, sachant que le nombre de balles à empiler est égal à (P + 1), ces moyens d'empilement (5) comportant, en outre, des moyens de retenue (25) de la ou des balles inférieures (2A, 2B) destinés à empêcher le glissement, notamment des premières balles (2A, 2B) par rapport au plateau de chargement (6) lors du chargement des balles suivantes (2'A, 2'B).

6. Dispositif de groupage (1) selon la revendication 5, caractérisé par le fait qu'il comporte des moyens (27) à même de détecter la présence de la (P + 1ème) balle (2'A ; 2'B) sur une pile et apte à actionner les moyens de rangement (4), pour assurer le déplacement transversal du plateau de chargement (6) d'un pas correspondant, sensiblement, à la largeur d'une balle.

7. Dispositif de groupage (1) selon l'une quelconque des revendications précédentes, caractérisé par le fait qu'il comporte des moyens (28) prévus pour assurer le déchargement des balles (2A, 2B ; 2'A, 2'B) parfaitement rangées et ordonnées sur le plateau de chargement (6), ces moyens de déchargement (28) consistant, d'une part, en des moyens de contrôle (29) de la présence de la dernière balle (2'B) sur la dernière pile (2B, 2'B) et, d'autre part, en des moyens (30) conçus pour assurer le basculement du plateau (6) vers l'arrière du dispositif de groupage (1) et la descente par gravité des balles (2A, 2'A ; 2B, 2'B).

8. Dispositif de groupage (1) selon la revendication 7, caractérisé par le fait que les moyens (30) consistent en un axe de rotation transversal (34) solidaire du châssis (9) et sur lequel est monté, déséquilibré vers l'arrière, ceci d'origine ou sous l'influence du poids des balles (2A, 2'A ; 2B, 2'B), le plateau de chargement (6), le dispositif de groupage (1) recevant, en outre, des moyens de maintien (35) dudit plateau (6) dans une position empêchant l'évacuation des balles, sur ces moyens de maintien (35) étant à même d'intervenir les moyens de contrôle (29) pour assurer leur déblocage et le basculement, au bon moment, dudit plateau de chargement (6).

9. Dispositif de groupage (1) selon l'une quelconque des revendications précédentes, caractérisé par le fait que sur le plateau de chargement (6) est montée pivotante au moins une rampe de guidage (42) dont l'extrémité avant est maintenue, surélevée, sensiblement, à hauteur de la sortie du canal (12) ceci sous l'impulsion de moyens élastiques (43) dont la raideur est déterminée de manière telle que ladite rampe de guidage (42) puisse s'affaisser, progressivement, sur le plateau de chargement (6) sous le poids d'une balle (2A, 2B) arrivant sur cette rampe de guidage (42).
